(19) Europäisches Patentamt
European Patent Office
Office européen des brevets

(11) **EP 3 912 810 B1**

(12) **EUROPEAN PATENT SPECIFICATION**

(45) Date of publication and mention of the grant of the patent:
**10.08.2022 Bulletin 2022/32**

(21) Application number: **20175210.2**

(22) Date of filing: **18.05.2020**

(51) International Patent Classification (IPC):
***B32B 27/06*** *(2006.01)* ***C08J 5/18*** *(2006.01)*
***C08L 23/14*** *(2006.01)*

(52) Cooperative Patent Classification (CPC):
(C-Sets available)
**C08J 5/18; C08L 23/14;** C08J 2323/14;
C08J 2423/14; C08L 2203/162; C08L 2205/025;
C08L 2205/03; C08L 2314/02; C08L 2314/06

(Cont.)

(54) **POLYPROPYLENE COMPOSITION**

POLYPROPYLENZUSAMMENSETZUNG

COMPOSITION DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 3 064 548**
**WO-A1-2017/097579**
**WO-A1-2019/012110**

EP 3 912 810 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/14, C08L 23/14, C08L 23/16;**
**C08L 23/14, C08L 23/16**

## Description

The present invention is related to a new polypropylene composition which combines low sealing initiation temperature (SIT), low xylene cold soluble (XCS) content and thus low overall migration and good optical properties, like low haze.

The present invention is furthermore related to the use of the polypropylene composition and articles, especially films made therefrom.

Polypropylenes are suitable for many applications.

For instance polypropylene (PP) is applicable in areas where sealing properties play an important role, like in the food or medical packing industry.

Heat sealing is the predominant method of manufacturing flexible and semi-rigid packages. An important indication of good sealing performance is inter alia a low sealing initiation temperature (SIT), which is needed to support high speed on packaging machines.

To ensure fast sealing, a low SIT is of advantage. By operating at lower temperature there is the benefit that the article to be sealed is not exposed to high temperature. There are also economic advantages, since lower temperatures are of course cheaper to generate and maintain.

There are further advantages in avoiding high sealing temperatures, especially when temperature sensitive goods are to be packed.

Furthermore, it is also desired to have a packaging material with satisfying optical properties, such as low haze.

In addition, certain regulations have to be fulfilled regarding the use of such materials in food contact applications, thus compliancy to food regulations in terms of overall migration (OM) is a must in advanced packaging applications. Thus, materials with a low content of xylene cold solubles (XCS) are desired.

Furthermore, a higher content of soluble resp. extractable components (like XCS) is also undesirable in the field of medical packaging.

Irrespectively from the polymer type, a polymer composition must fulfil at best all desired end properties and additionally must be easily processable, i.e. must withstand stress. However, end properties and processing properties act often in a conflicting manner.

It frequently turns out that improvement of one of the desired properties is achieved on the expense of the other properties.

For example, in order to improve the sealing behaviour, normally low sealing initiation temperature (SIT) is obtained with higher comonomer content, however causing two problems:

1. High comonomer results in lower Tm, which potentially makes steam sterilization worse or even impossible, and
2. Incorporation of a higher amount of comonomers, especially for PP based on Ziegler-Natta (ZN) type catalysts, causes problems with C6-solubles (FDA) and overall migration.

WO 2019012110 A1 discloses a polypropylene composition comprising a blend of (A) 50.0 to 99.0 wt.-% of a propylene- ethylene random copolymer with an ethylene content in the range of from 0.1 to 12.0 wt.-%, an $MFR_2$(230°C, 2.16kg, ISO 1133) in a range of from 0.5 to 60.0 g/10 min and a melting temperature Tm (DSC) is in the range of from 135°C to 155°C and (B) 1.0 to 50.0 wt.-% of a propylene-hexene random copolymer with a hexene content in the range of from 0.1 to 12.0 wt.-% and an $MFR_2$(230°C, 2.16kg, ISO 1133) in a range of from 0.5 to 60.0 g/10 min and a melting temperature Tm (DSC) is in the range of from 120°C to 140°C, whereby (i) the melting temperature of the propylene-hexene random copolymer (B) is lower than the melting temperature of the propylene- ethylene random copolymer (A) and (ii) the $MFR_2$ (230°C, 2.16kg, ISO 1133) of the blend is in a range of from 0.5 to 60.0 g/10 min.

In the examples both components have very high MFR of above 30.0 g/10 min. The limited compatibility of the two component results in a rather high haze of more than 50% for all inventive examples.

EP 3387066 A-1 claims a propylene polymer composition comprising (a) from 40 to 80 wt.-% of a propylene 1-hexene copolymer containing from 5.5 to 9.0 wt.-% of 1-hexene derived units having a MFR (230°C/2.16 kg) from 3.5 to 12.0 g/10 min; (b) from 20 to 60 wt.---% of a propylene ethylene copolymer containing from 1.5 wt.-% to 6.5 wt.-% of ethylene derived units, having a $MFR_2$(230°C/2.16 kg) from 3.5 to 12.0 g/10 min; the sum of the amount of a) and b) being 100.

Component b) is made with a Ziegler Natta catalyst and the polymer used in the Examples has a quite high xylene cold soluble (XCS) content of 18.0 wt.-%, which is, as already stated above, not desired for a variety of applications, since higher migration values are to be expected. Sealing initiation temperature (SIT) values are given, but they were determined when 2N are reached. If determined when 5N are reached, the SIT values would be clearly higher.

Although a lot of development work has been done in that field, there is still a need for further improvement and thus to design materials having an improved balance between low sealing initiation temperature SIT, beneficial optical properties and low xylene cold soluble (XCS) content.

The present invention is based on the finding that the above discussed needs for heat sealing applications can be achieved by a specific design of a polypropylene composition.

**Summary of the Invention**

Thus the present invention is related to a polypropylene composition comprising a blend of

(A) 60.0 to 95.0 wt.-% of a metallocene catalysed propylene-hexene random copolymer with a-1) a 1-hexene content in the range of from 1.0 to below 5.5 wt.-%,

a-2) an $MFR_2$ (230°C, 2.16kg, ISO1133) in a range of from 1.0 to 20.0 g/10 min
a-3) a melting temperature Tm (DSC) is in the range of from 130°C to 160°C and
a-4) a xylene cold soluble (XCS) amount in the range of 0.3 to 3.0 wt.-% (measured according to ISO 16152, 2005, at 25°C) and

(B) 5.0 to 40.0 wt.-% of a Ziegler-Natta catalysed propylene-ethylene random copolymer with

b-1) an ethylene content in the range of from 0.5 to 8.0 wt.-%,
b-2) an $MFR_2$ (230°C, 2.16kg, ISO1133) in a range of from 1.0 to 20.0 g/10 min,
b-3) a melting temperature Tm (DSC) is in the range of from 125°C to 160°C and
b-4) a xylene cold soluble (XCS) amount in the range of greater than 2.5 to 10.0 wt.-% (measured according to ISO 16152, 2005, at 25°C)

It has surprisingly been found out that such compositions have an optimized or improved balance between low sealing initiation temperature SIT, beneficial optical properties, low overall XCS amount and thus low migration.

Additionally, it has surprisingly found out that the sealing initiation temperature SIT of the blend is lower than for the individual components. This is contrary to the situation in EP 3387066, where the sealing initiation temperature SIT of the blend is higher than for the individual components.

In a further embodiment the invention is related to the use of the above defined composition for preparing articles and to the articles themselves. The articles are preferably films, more preferably cast films and even more preferably unoriented monolayer cast films.

**Detailed description**

In the following the individual components are defined in more detail.

The polypropylene composition of the present inventions comprises a blend of

(A) a propylene-hexene random copolymer and
(B) a propylene-ethylene random copolymer

***Component (A) propylene-hexene random copolymer***

The propylene-hexene random copolymer has an 1-hexene content in the range of from 1.0 to below 5.5 wt.-%, preferably in the range of from 1.5 to 5.0 wt.-%, more preferably in the range of from 2.0 to 4.5 wt.-%, yet more preferably in the range of from 2.5 to 4.2 wt.-%, and even more preferably in the range of from 2.8 to 4.0 wt.-%.

The $MFR_2$(230°C, 2.16kg, ISO1133) of the propylene-hexene random copolymer is in the range of from 1.0 to 20.0 g/10 min, preferably in the range of from 1.5 to 15.0 g/10 min, more preferably in the range of from 2.0 to 12.0 g/10 min, yet more preferably in the range of from 3.0 to 10.0 g/10 min and even more preferably in the range of from 4.0 to 8.0 g/10 min.

The melting temperature Tm of the propylene-hexene random copolymer is in the range of from 130°C to 160°C, preferably in the range of from 132°C to 155°C, and more preferably in the range of from 134°C to 150°C.

The propylene-hexene random copolymer furthermore has a xylene cold soluble (XCS) amount (measured according to ISO 16152, 2005, at 25°C) in the range of 0.3 to 3.0 wt.-%, preferably in the range of 0.4 to 2.5 wt.-%, more preferably in the range of 0.5 to 2.0 wt.-%.

The propylene-hexene random copolymer as described above is obtained in the presence of a metallocene catalyst.

The metallocene catalyst can be a supported catalyst, using conventional supports or can be free from an external carrier. By free from an external carrier is meant that the catalyst does not contain an external support, such

as an inorganic support, for example, silica or alumina, or an organic polymeric support material

Preferably used are metallocene catalysts which are free from an external carrier.

Preferably, the metallocene catalyst comprises (i) a complex of formula (I):

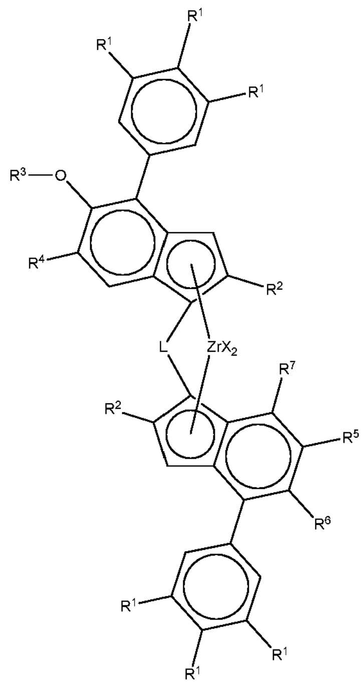

each X independently is a sigma-donor ligand,

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms of Group 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$ arylalkyl, $C_{7-20}$ alkylaryl group or $C_{6-20}$ aryl group or an OY group, wherein Y is a $C_{1-10}$ hydrocarbyl group, and optionally two adjacent $R^1$ groups can be part of a ring including the phenyl carbons to which they are bonded,

each $R^2$ independently are the same or can be different and are a $eH_2$-$R^8$ group, with $R^8$ being H or linear or branched $C_{1-6}$-alkyl group, $C_{3-8}$ cycloalkyl group, $C_{6-10}$ aryl group,

$R^3$ is a linear or branched $C_1$-$C_6$-alkyl group, $C_{7-20}$ arylalkyl, $C_{7-20}$ alkylaryl group or $C_6$-$C_{20}$-aryl group,

$R^4$ is a $C(R^9)_3$ group, with $R^9$ being a linear or branched $C_1$-$C_6$ alkyl group,

$R^5$ is hydrogen or an aliphatic $C_1$-$C_{20}$ hydrocarbyl group optionally containing one or more heteroatoms from groups 14-16 of the periodic table of elements;

$R^6$ is hydrogen or an aliphatic $C_1$-$C_{20}$ hydrocarbyl group optionally containing one or more heteroatoms from groups 14-16 of the periodic table of elements; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$ hydrocarbyl group, or a $C_1$-$C_{20}$ hydrocarbyl radical optionally containing one or more heteroatoms belonging to groups 14-16 of the periodic table of elements;

$R^7$ is H or a linear or branched $C_1$-$C_6$-alkyl group or an aryl or heteroaryl group having 6 to 20 carbon atoms optionally substituted by one to 3 groups $R^1$,

(ii) a cocatalyst system comprising a boron containing cocatalyst and/or an aluminoxane cocatalyst and

(iii) optionally a silica support.

Each X independently is a sigma-donor ligand, thus each X may be the same or different, and is preferably a hydrogen atom, a halogen atom, a linear or branched, cyclic or acyclic $C_{1-20}$-alkyl or -alkoxy group, a $C_{6-20}$-aryl group, a $C_{7-20}$-alkylaryl group or a $C_{7-20}$-arylalkyl group; optionally containing one or more heteroatoms of Group 14-16 of the periodic table.

The term "$C_{1-20}$ hydrocarbyl group" includes $C_{1-20}$-alkyl, $C_{2-20}$-alkenyl, $C_{2-20}$-alkynyl, $C_{3-20}$-cycloalkyl, $C_{3-20}$-cycloalkenyl, $C_{6-20}$-aryl groups, $C_{7-20}$-alkylaryl groups or $C_{7-20}$-arylalkyl groups or of course mixtures of these groups such as cycloalkyl substituted by alkyl. Linear and branched hydrocarbyl groups cannot contain cyclic units. Aliphatic hydrocarbyl groups cannot contain aryl rings.

Unless otherwise stated, preferred $C_{1-20}$ hydrocarbyl groups are $C_{1-20}$ alkyl, $C_{4-20}$ cycloalkyl, $C_{5-20}$ cycloalkyl-alkyl groups, $C_{7-20}$ alkylaryl groups, $C_{7-20}$ arylalkyl groups or $C_{6-20}$ aryl groups, especially $C_{1-10}$ alkyl groups, $C_{6-10}$ aryl groups, or $C_{7-12}$ arylalkyl groups, e.g. $C_{1-8}$ alkyl groups. Most especially preferred hydrocarbyl groups are methyl, ethyl, propyl, isopropyl, tert-butyl, isobutyl, $C_{5-6}$-cycloalkyl, cyclohexylmethyl, phenyl or benzyl.

The term "halo" includes fluoro, chloro, bromo and iodo groups, especially chloro or fluoro groups, when relating to the complex definition.

Any group including "one or more heteroatoms belonging to groups 14-16 of the periodic table of elements " preferably means O, S or N. N groups may present as -NH- or -NR"- where R" is C1-C10 alkyl. There may, for example, be 1 to 4 heteroatoms. The group including one or more heteroatoms belonging to groups 14-16 of the periodic table of elements may also be an alkoxy group, e.g. a $C_1$-$C_{10}$-alkoxy group.

Preferred complexes for the preparation of the propylene-hexene random copolymer are for example described in WO2019179959.

More preferred complexes are of formula (II)

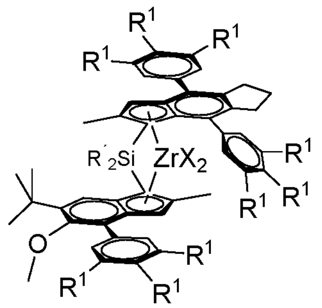

wherein each $R^1$ are independently the same or can be different and are hydrogen or a linear or branched $C_1$-$C_6$-alkyl group, whereby at least on $R^1$ per phenyl group is not hydrogen,
R' is a $C_{1-10}$ hydrocarbyl group, preferably a $C_{1-4}$ hydrocarbyl group and more preferably a methyl group and
X independently is a hydrogen atom, a halogen atom, $C_{1-6}$ alkoxy group, $C_{1-6}$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.

Specific preferred metallocene catalyst complexes of the invention include:

rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride
or their corresponding zirconium dimethyl analogues.

The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO2002/02576, WO2011/135004, WO2012/084961, WO2012/001052, WO2011/076780, WO2015/158790 and WO2018/122134. The examples section also provides the skilled person with sufficient direction.

*Cocatalyst*

To form an active catalytic species it is normally necessary to employ a cocatalyst as is well known in the art.

According to the present invention a cocatalyst system comprising a boron containing cocatalyst and/or an aluminoxane cocatalyst is used in combination with the above defined metallocene catalyst complex.

The aluminoxane cocatalyst can be one of formula (III):

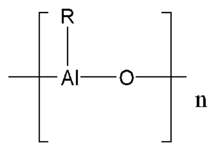

(III)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_{3-10}$ cycloalkyl, $C_7$-$C_{12}$ arylalkyl or alkylaryl and/or phenyl or naphthyl, and where Y can be hydrogen, halogen, preferably chlorine or bromine, or C1-C10 alkoxy, preferably methoxy or ethoxy. The resulting oxygen-containing aluminoxanes are not in general pure compounds but mixtures of oligomers of the formula (III).

The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

According to the present invention, also a boron containing cocatalyst can be used instead of the aluminoxane cocatalyst or the aluminoxane cocatalyst can be used in combination with a boron containing cocatalyst.

It will be appreciated by the skilled man that where boron based cocatalysts are employed, it is normal to prealkylate the complex by reaction thereof with an aluminium alkyl compound, such as TIBA. This procedure is well known and any suitable aluminium alkyl, e.g. $Al(C_{1-6}\text{-alkyl})_3$. can be used. Preferred aluminium alkyl compounds are triethylaluminium, triisobutylaluminium, tri-isohexylaluminium, tri-n-octylaluminium and tri-isooctylaluminium. Alternatively, when a borate cocatalyst is used, the metallocene catalyst complex is in its alkylated version, that is for example a dimethyl or dibenzyl metallocene catalyst complex can be used.

Boron based cocatalysts of interest include those of formula (IV)

$BY_3$ (IV)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate 3+ ion. Such ionic cocatalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include: triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate. Preference is given to triphenylcarbeniumtetrakis(pentafluorophenyl) borate, N,N-dimethylcyclohexylammoniumtetrakis(pentafluorophenyl)borate or N,N- dimethylbenzylammoniumtetrakis(pentafluorophenyl)borate.

It has been surprisingly found that certain boron cocatalysts are especially preferred. Preferred borates of use

in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred cocatalysts are alumoxanes, more preferably methylalumoxanes, combinations of alumoxanes with Al-alkyls, boron or borate cocatalysts, and combination of alumoxanes with boron-based cocatalysts.

Suitable amounts of cocatalyst will be well known to the skilled man.

The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support a metallocene catalyst.

Especially preferably, the support is a porous material so that the complex may be loaded into the pores of the support, e.g. using a process analogous to those described in WO94/14856 (Mobil), WO95/12622 (Borealis) and WO2006/097497.

The average particle size of the silica support can be typically from 10 to 100 μm. However, it has turned out that special advantages can be obtained if the support has an average particle size from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

The propylene-hexene random copolymer can be produced in a single polymerization step comprising a single polymerization reactor (R1) or in a sequential polymerization process comprising at least two polymerization reactors (R1) and (R2), whereby in the first polymerization reactor (R1) a first propylene copolymer fraction (R-PP1) is produced, which is subsequently transferred into the second polymerization reactor (R2). In the second polymerization reactor (R2) a second propylene copolymer fraction (R-PP2) is produced in the presence of the first propylene copolymer fraction (R-PP1).

Polymerization processes which are suitable for producing the propylene-hexene random copolymer generally comprises at one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the propylene-hexene random copolymer is produced in at least two reactors connected in series. Accordingly such a polymerization system comprises at least a first polymerization reactor (R1) and a second polymerization reactor (R2), and optionally a third polymerization reactor (R3).

The first, respectively the single, polymerization reactor (R1) is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

In case a "sequential polymerization process" is applied the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

The propylene-hexene random copolymer can be unimodal or multimodal, like bimodal, in view of comonomer content and/or $MFR_2$.

If the propylene-hexene random copolymer is unimodal, it is preferably produced in a single polymerization step in one polymerization reactor (R1). Alternatively a unimodal propylene-hexene random copolymer can be produced in a sequential polymerization process using the same polymerization conditions in all reactors.

If the propylene-hexene random copolymer is multimodal, it is preferably produced in a sequential polymerization process using different polymerization conditions (amount of comonomer, hydrogen amount, etc.) in the reactors.
Preferably the propylene-hexene random copolymer used according to the present invention is bimodal, especially in view of MFR and/or 1-hexene content.
In this case, the propylene-hexene random copolymer, comprises two polymer fractions (R-PP1) and (R-PP2).
Preferably, the propylene-hexene random copolymer consists of

25.0 to 50.0 wt.-%, preferably 30.0 to 48.0 wt.-%, more preferably 35.0 to 45.0 wt.-% of polymer fraction (R-PP1) having

(i) a 1-hexene content in the range of from 0.5 to 5.0 wt.-%, preferably 0.8 to 4.0 wt.-%, more preferably 1.0 to 3.0 wt.-% and
(ii) a melt flow rate $MFR_2$ (230°C/2.16kg) measured according to ISO 1133 in the range of from 2.0 to 10.0 g/10min, preferably from 3.0 to 9.0 g/10min, and

50.0 to 75.0 wt.-%, preferably 52.0 to 70.0 wt.-%, more preferably 55.0 to 65.0 wt.-% of polymer fraction (R-PP2) having

(i) a 1-hexene content in the range of from 3.5 to 10.0 wt.-%, preferably in the range of from 4.0 to 8.0 wt.-%, more preferably in the range of from 4.5 to 7.5 wt.-%, and
(ii) a melt flow rate $MFR_2$ (230°C/2.16kg) measured according to ISO 1133 in the range of from 1.0 to 20.0 g/10min, preferably from 3.0 to 15.0 g/10min, more preferably from 5.0 to 10.0 g/10 min

whereby the 1-hexene content of polymer fraction (R-PP2) is higher than the 1-hexene content of polymer fraction (R-PP1).

Fraction (R-PP1) may be further characterized by an amount of xylene cold soluble (XCS) in the range of 0.3 to 3.0 wt.-%, preferably in the range of 0.4 to 2.5 wt.-% and more preferably in the range of 0.5 to 2.0 wt.-%, and Fraction (R-PP2) may be further characterized by an amount of xylene cold soluble (XCS) in the range of 0.3 to 3.0 wt.-%, preferably in the range of 0.4 to 2.5 wt.-% and more preferably in the range of 0.5 to 2.0 wt.-%.
The propylene-hexene random copolymer as defined in the instant invention may contain up to 5.0 wt.-% additives, like $\alpha$-nucleating agents and antioxidants, as well as slip agents and antiblocking agents. Preferably, the additive content (without $\alpha$-nucleating agents) is below 3.0 wt.-%, like below 1.0 wt.-%.

***Component (B) propylene-ethylene random copolymer***

The propylene-ethylene random copolymer has an ethylene content in the range of from 0.5 to 8.0 wt.-%, preferably in the range of from 0.8 to 7.0 wt.-%, more preferably in the range of from 1.0 to 6.0 wt.-%, yet more preferably in the range of from 1.2 to 5.0 wt.-% and even more preferably in the range of from 1.4 to 4.5 wt.-%.
The $MFR_2$ (230°C, 2.16kg, ISO1133) of the propylene-ethylene random copolymer is in the range of from 1.0 to 20.0 g/10 min, preferably in the range of from 1.5 to 16.0 g/10 min, more preferably in the range of from 2.0 to 12.0 g/10 min, yet more preferably in the range of from 3.0 to 10.0 g/10 min.
The melting temperature Tm of the propylene-ethylene random copolymer is in the range of from 125°C to 160°C, preferably in the range of from 130°C to 158°C, more preferably of from 140 to 155°C.
In order to be suitable for food or pharmaceutical packaging applications it is furthermore desirable that the propylene-ethylene random copolymer has a limited amount of soluble and/or extractable substances.
It is therefore further preferred that the content of xylene cold solubles (XCS) of the propylene-ethylene random copolymer is from greater than 2.5 to 10.0 wt.-%, more preferred from 3.0 to 9.0 wt.-% and even more preferably from 3.5 to 8.0 wt.-%.
The propylene-ethylene random copolymer can be produced in a single polymerization step comprising a single polymerization reactor (R1) or in a sequential polymerization process comprising at least two polymerization reactors (R1) and (R2), whereby in the first polymerization reactor (R1) a first propylene copolymer fraction (R-PP1) is produced, which is subsequently transferred into the second polymerization reactor (R2). In the second polymerization reactor (R2) a second propylene copolymer fraction (R-PP2) is then produced in the presence of the first propylene copolymer fraction (R-PP1).
The term "polymerization reactor" is defined as described above for Component (A).
The term "sequential polymerization process" is defined as described above for Component (A).
Polymerization processes which are suitable for producing the propylene-ethylene random copolymer generally

comprises one or two polymerization stages and each stage can be carried out in solution, slurry, fluidized bed, bulk or gas phase.

The propylene-ethylene random copolymer can be unimodal or multimodal, like bimodal, in view of comonomer content and/or $MFR_2$.

If the propylene-ethylene random copolymer is unimodal, it is preferably produced in a single polymerization step in one polymerization reactor (R1). Alternatively a unimodal propylene-ethylene random copolymer can be produced in a sequential polymerization process using the same polymerization conditions in all reactors.

If the propylene-ethylene random copolymer is multimodal, it is preferably produced in a sequential polymerization process using different polymerization conditions (amount of comonomer, hydrogen amount, etc.) in the reactors.

The propylene-ethylene random copolymer (B) according to this invention has been produced in the presence of a Ziegler-Natta catalyst.

The Ziegler-Natta catalyst is fed into the first, respectively the single, polymerization reactor (R1) and is optionally transferred with the polymer (slurry) obtained in the first polymerization reactor (R1) into the subsequent reactors, if the propylene-ethylene random copolymer is produced in a sequential polymerization process.

If the process covers also a pre-polymerization step it is preferred that all of the Ziegler-Natta catalyst is fed in the pre-polymerization reactor. Subsequently the pre-polymerization product containing the Ziegler-Natta catalyst is transferred into the first, respectively the single, polymerization reactor (R1).

This Ziegler-Natta catalyst can be any stereo-specific Ziegler-Natta catalyst for propylene polymerization, which preferably is capable of catalysing the polymerization and copolymerization of propylene and comonomers at a pressure of 500 to 10000 kPa, in particular 2500 to 8000 kPa, and at a temperature of 40 to 110°C, in particular of 60 to 110°C. Preferably, the Ziegler-Natta catalyst (ZN-C) comprises a high-yield Ziegler-Natta type catalyst including an internal donor component, which can be used at high polymerization temperatures of 80°C or more.

Such high-yield Ziegler-Natta catalyst (ZN-C) can comprise a succinate, a diether, a phthalate etc., or mixtures therefrom as internal donor (ID), and are for example commercially available for example from LyondellBasell under the Avant ZN trade name.

Further useful solid catalysts are also those disclosed in WO-A-2003/000757, WO-A-2003/000754, WO-A-2004/029112 and WO2007/137853. These catalysts are solid catalysts of spherical particles with compact structure and low surface area of the particles. Further, these catalysts are featured by a uniform distribution of catalytically active sites thorough the catalyst particles. Catalysts are prepared by emulsion-solidification method, where no external support is needed. The dispersed phase in the form of liquid droplets of the emulsion forms the catalyst part, which is transformed to solid catalyst particles during the solidification step.

Thus, in an embodiment of the present invention, the solid catalyst component is prepared by a process comprising:

- preparing a solution of magnesium complex by reacting an alkoxy magnesium compound and an electron donor or a precursor thereof in a $C_6$-$C_{10}$ aromatic liquid reaction medium;
- reacting said magnesium complex with a four valent titanium compound, preferably $TiCl_4$ , at a temperature greater than 10°C and less than 50°C to produce an emulsion of a denser, dispersed phase having Ti/Mg mol ratio 0.1 to 10 and in a continuous phase having Ti/Mg mol ratio 10 to 100; and
- agitating the emulsion, optionally in the presence of an emulsion stabilizer and/or a turbulence minimizing agent, in order to maintain the droplets of said dispersed phase within an average size range of 5 to 200 $\mu$m.

The catalyst particles are obtained after solidifying said droplets of the dispersed phase by heating, preferably at a temperature from 80°C to 110°C. In said process an aluminium alkyl compound of the formula $AlR_{3-n}X_n$, where R is an alkyl and/or an alkoxy group of 1 to 20, preferably of 1 to 10 carbon atoms, X is a halogen and n is 0, 1 or 2 , is added and brought into contact with the droplets of the dispersed phase of the agitated emulsion. Alternatively, the aluminium alkyl compound of the formula $AlR_{3-n}X_n$, is brought into contact with the solidified particles at the washing step before recovering the final solid particles.

Suitable internal electron donors are, among others, (di)esters of aromatic (di)carboxylic acids. Said aromatic carboxylic acid ester or diester can be formed in situ by reaction of an aromatic carboxylic acid chloride or diacid chloride with a $C_2$-$C_{16}$ alkanol and/or diol, and is preferable di-2-ethyl-hexyl phthalate.

A further suitable catalyst for the present invention is a solid Ziegler-Natta catalyst, which comprises compounds of a transition metal of Group 4 to 6 of IUPAC, like titanium, a Group 2 metal compound, like a magnesium, and an internal donor being a non-phthalic compound, more preferably a non-phthalic acid ester, still more preferably being a diester of non-phthalic dicarboxylic acids as described in more detail below. Thus, the catalyst is fully free of undesired phthalic compounds. Further, the solid catalyst is free of any external support material, like silica or $MgCl_2$, but the catalyst is self-supported.

This Ziegler-Natta catalyst) can be further defined by the way as obtained.

Accordingly, the Ziegler-Natta catalyst is preferably obtained by a process comprising the steps of

a)

a1) providing a solution of at least a Group 2 metal alkoxy compound (Ax) being the reaction product of a Group 2 metal compound and a monohydric alcohol (A) comprising in addition to the hydroxyl moiety at least one ether moiety optionally in an organic liquid reaction medium; or
a2) a solution of at least a Group 2 metal alkoxy compound (Ax') being the reaction product of a Group 2 metal compound and an alcohol mixture of the monohydric alcohol (A) and a monohydric alcohol (B) of formula ROH, optionally in an organic liquid reaction medium; or
a3) providing a solution of a mixture of the Group 2 alkoxy compound (Ax) and a Group 2 metal alkoxy compound (Bx) being the reaction product of a Group 2 metal compound and the monohydric alcohol (B), optionally in an organic liquid reaction medium; or
a4) providing a solution of Group 2 alkoxide of formula $M(OR^1)_n(OR^2)_mX_{2-n-m}$ or mixture of Group 2 alkoxides $M(OR^1)_{n'}X_{2-n'}$ and $M(OR^2)_mX_{2-m'}$, where M is Group 2 metal, X is halogen, $R^1$ and $R^2$ are different alkyl groups with $C_2$ to $C_{16}$ carbon atoms, and $0 < n < 2$, $0 < m < 2$ and $n+m+(2-n-m) = 2$, provided that both n and $m \neq 0$, $0 < n' < 2$ and $0 < m' < 2$; and

b) adding said solution from step a) to at least one compound of a transition metal of Group 4 to 6 and
c) obtaining the solid catalyst component particles,

and adding a non-phthalic internal donor, at any step prior to step c).

The internal donor or precursor thereof is added preferably to the solution of step a).

According to the procedure above the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

Further details regarding these methods are described e.g. in WO2019012110

The non-phthalic internal donor that can be preferably used in the preparation of the catalyst is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

Detailed description of preparation of catalysts are further disclosed in WO 2012/007430, EP2610271, EP 261027 and EP2610272.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

RapRbqSi(ORc)(4-p-q)

wherein Ra, Rb and Rc denote a hydrocarbon radical, in particular an alkyl or cycloalkyl group, and wherein p and q are numbers ranging from 0 to 3 with their sum p + q being equal to or less than 3. Ra, Rb and Rc can be chosen independently from one another and can be the same or different. Specific examples of such silanes are $(tert\text{-}butyl)_2Si(OCH_3)_2$, $(cyclohexyl)(methyl)Si(OCH_3)_2$, $(phenyl)_2Si(OCH_3)_2$ and $(cyclopentyl)_2Si(OCH_3)_2$, or of general formula

$$Si(OCH_2CH_3)_3(NR^5R^6)$$

wherein $R^5$ and $R^6$ can be the same or different a represent a hydrocarbon group having 1 to 12 carbon atoms.

$R^5$ and $R^6$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^5$ and $R^6$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^5$ and $R^6$ are the same, yet more preferably both $R^5$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor, a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally

(b) the mol-ratio of co-catalyst (Co) to titanium compound (TC) [Co/TC] must be in the range of above 80 to 500, preferably is in the range of 100 to 350, still more preferably is in the range of 120 to 300.

The propylene-ethylene random copolymer as defined in the instant invention may contain up to 5.0 wt.-% additives, like $\alpha$-nucleating agents and antioxidants, as well as slip agents and antiblocking agents. Preferably the additive content (without $\alpha$-nucleating agents) is below 3.0 wt.-%, like below 1.0 wt.-%.

**Polypropylene composition**

The polypropylene composition according to this invention can be obtained by (melt)-mixing the individual fractions, i.e. propylene-hexene random copolymer (A) and propylene-ethylene random copolymer (B). During the melt mixing suitable additives can additionally be added. For mixing, a conventional compounding or blending apparatus, e.g. a Banbury mixer, a 2-roll rubber mill, Buss-co-kneader, a single screw extruder with special mixing segments or a twin screw extruder may be used. The polymer composition recovered from the extruder is usually in the form of pellets.

In the blend for the polypropylene composition according to this invention component (A) is present in an amount of from 60.0 to 95.0 wt.-% and component (B) is present in an amount of from 5.0 to 40.0 wt.-%.

Preferably component (A) is present in an amount of from 65.0 to 92.0 wt.-% and more preferably in an amount of from 70.0 to 90.0 wt.-%.

Thus component (B) is preferably present in an amount of from 8.0 to 35.0 wt.-% and more preferably in an amount of from 10.0 to 30.0 wt.-%.

The overall melt flow rate, i.e. the melt flow rate $MFR_2$ (230°C) measured according to ISO 1133 of polypropylene composition is in a range of from 1.0 to 20.0 g/10 min, preferably in a range of from 1.5 g/10min to 16.0 g/10 min, more preferably in a range of from 2.0 g/10 min to 12.0 g/10 min and even more preferably in a range of from 2.5 to 10.0 g/10 min.

It is appreciated that the inventive polypropylene composition has a melting temperature in the range of from 130°C to 155°C, preferably in the range of from 135°C to 150°C, and more preferably in the range of from 137°C to 147°C.

Additionally it is appreciated that the inventive polypropylene composition has a crystallization temperature in the range of from 85°C to 115°C, preferably in the range of from 90°C to 110°C and more preferably in the range of from 95°C to 105°C.

Furthermore the inventive polypropylene composition is characterized by a low level of xylene cold soluble (XCS) fraction, which is in the range of from 1.0 to 10.0 wt.-% (determined at 25°C according ISO 16152; 2005), preferably in the range of from 1.3 to 8.0 wt.-% and more preferably in the range from 1.5 to 6.5 wt.-%.

The polypropylene composition as defined in the instant invention may contain up to 5.0 wt.-% additives, like $\alpha$-nucleating agents and antioxidants, as well as slip agents and antiblocking agents. Preferably the additive content (without $\alpha$-nucleating agents) is below 3.0 wt.-%, like below 1.0 wt.-%.

**Applications**

The present invention is not only directed to the instant polypropylene composition but also the use of the polypropylene composition for preparing articles and the articles comprising the polypropylene composition.

Suitable articles are films for flexible packaging systems, such as bags or pouches for food and pharmaceutical packaging or medical articles in general.

In an embodiment the present invention is related also to films and film layers, preferably unoriented films or film layers, of multi-layer film constructions comprising the inventive polypropylene composition. Accordingly the present invention is also directed to preferably unoriented films, like cast films or blown films, e.g. air cooled blown films, comprising at least 90.0 wt.-%, preferably comprising at least 95.0 wt.-%, yet more preferably comprising at least 99.0 wt.-%, of the

instant polypropylene composition. Most preferred are unoriented monolayer cast films.

It has been found that such polypropylene composition according to the present invention provides the film material made thereof with a combination of low sealing initiation temperature (S.I.T), beneficial optical properties and low amounts of xylene cold solubles.

Films comprising the inventive polypropylene composition shall preferably have a tensile modulus in machine and transverse direction determined on 50 μm cast film in a range of 350 to 800 MPa, more preferably in a range of 380 to 750 MPa, like in a range of 400 to 720 MPa.

Furthermore, films comprising the inventive polypropylene composition shall preferably have a sealing initiation temperature (SIT) in the range of from 90°C to 125°C, more preferably in the range of from 95°C to less than 120°C, like in the range of from 100°C to less than 115°C.

Even further, such an film comprising the inventive polypropylene composition shall preferably have a haze determined on 50 μm cast film in a range of from 0.01 to below 1.0%, preferably in a range of from 0.05 to below 0.50% and more preferably in a range of from 0.10 to below 0.40%.

Further, the invention is also directed to a multi-layer film construction, comprising an unoriented film as defined above as an outermost layer, which serves as a sealing layer in the multi-layer film construction.

A multi-layer film construction comprising at least one layer comprising the inventive polypropylene composition is preferably produced by multi-layer co-extrusion followed by film casting or film blowing. In this case, at least one of the outermost layers of said multi-layer film construction serving as sealing layer(s) shall comprise the inventive polypropylene composition as defined above. The inventive multilayer film construction shall preferably have a thickness in the range of 30 to 500 μm, more preferably in the range of 50 to 400 μm, like in the range of 60 to 300 μm. The sealing layer(s) comprising the inventive polypropylene composition shall preferably have a thickness in the range of 3 to 50 μm, more preferably in the range of 5 to 30 μm, like in the range of 8 to 25 μm.

Films and/or multi-layer film constructions according to the present invention shall preferably be used for flexible packaging systems, such as bags or pouches for food and pharmaceutical packaging or medical articles in general.

In case a film is produced by cast film technology the molten polypropylene composition is extruded through a slot extrusion die onto a chill roll to cool the polypropylene composition to a solid film. Typically the polypropylene composition is firstly compressed and liquefied in an extruder, it being possible for any additives to be already added to the polypropylene composition or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10°C to 50°C, preferably from 15°C to 40°C.

In the blown film process the polypropylene composition melt is extruded through an annular die and blown into a tubular film by forming a bubble which is collapsed between nip rollers after solidification. The blown extrusion can be preferably effected at a temperature in the range 160°C to 240°C, and cooled by water or preferably by blowing gas (generally air) at a temperature of 10°C to 50°C to provide a frost line height of 0.5 to 8 times the diameter of the die. The blow up ratio should generally be in the range of from 1.5 to 4, such as from 2 to 4, preferably 2.5 to 3.5.

**Methods**

**The xylene soluble fraction at room temperature (XCS, wt.-%):** The amount of the polymer soluble in xylene is determined at 25°C according to ISO 16152; 2005.

*Calculation of XCS and comonomer content of the second polymer fraction (R-PP2):*

While comonomer content and XCS of the first polymer fraction (R-PP1) of the propylene-hexene random copolymer (A) can be determined directly on samples taken after the first polymerization step, said values have to be calculated for the second polymer fraction (R-PP2). A simple mixing rule is used for this purpose, giving the formulas

$$XCS(R-PP2) = \frac{100\ x\ XCS(A) - w(R-PP1)\ x\ XCS(R-PP1)}{w(R-PP2)}$$

and

$$C6(R-PP2) = \frac{100\ x\ C6(A) - w(R-PP1)\ x\ C6(R-PP1)}{w(R-PP2)}$$

wherein

w(R-PP1) is the weight fraction [in wt.-%] of the polymer fraction R-PP1
w(R-PP2) is the weight fraction [in wt.-%] of the polymer fraction R-PP2,
XCS(R-PP1) is the XCS content [in wt.-%] of the polymer fraction R-PP1,
XCS(A) is the XCS content [in wt.-%] of the propylene-hexene random copolymer (A),
XCS(R-PP2) is the calculated XCS content [in wt.-%] of the polymer fraction R-PP2,
C6(R-PP1) is the 1-hexene content [in wt.-%] of the polymer fraction R-PP1,
C6(A) is the 1-hexene content [in wt.-%] of the propylene-hexene random copolymer (A),
C6(R-PP2) is the calculated 1-hexene content [in wt.-%] of the polymer fraction R-PP2.

**$MFR_2$(230°C)** is measured according to ISO 1133 (230°C, 2.16 kg load)

The melt flow rate is measured as the $MFR_2$ in accordance with ISO 1133 15 (230°C, 2.16 kg load) for polypropylene. The MFR is an indication of the flowability, and hence the processability, of the polymer. The higher the melt flow rate, the lower the viscosity of the polymer.

*Calculation of melt flow rate $MFR_2$ (230 °C) of the polymer fraction (R-PP2):*

$$MFR(R-PP2) = 10^{\left[\frac{\log(MFR(A)) - w(R-PP1)\ x \log(MFR(R-PP1))}{w(R-PP2)}\right]}$$

wherein

w(R-PP1) is the weight fraction [in wt.-%] of the polymer fraction R-PP1
w(R-PP2) is the weight fraction [in wt.-%] of the polymer fraction R-PP2,
MFR(R-PP1) is the melt flow rate $MFR_2$ (230°C) [g/10min] of the polymer fraction R-PP1,
MFR(A) is the melt flow rate $MFR_2$ (230°C) [g/10min] of the propylene-hexene random copolymer (A),
MFR(R-PP2) is the calculated melt flow rate MFR2 (230°C) [g/10min] of the polymer fraction R-PP2.

**Comonomer determination by NMR spectroscopy (C2 determination)**

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This

method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Comonomer determination: 1-hexene content - $^{13}C$ NMR spectroscopy**

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.(Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the NOE at short recycle delays of 3s (Klimke, K., Parkinson, M., Piel, C., Kaminsky, W., Spiess, H.W., Wilhelm, M., Macromol. Chem. Phys. 2006;207:382., Pollard, M., Klimke, K., Graf, R., Spiess, H.W., Wilhelm, M., Sperber, O., Piel, C., Kaminsky, W., Macromolecules 2004;37:813.). and the RS-HEPT decoupling scheme (Filip, X., Tripon, C., Filip, C., J. Mag. Resn. 2005, 176, 239., Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-hexene were observed and the comonomer content quantified in the following way.

The amount of 1-hexene incorporated in PHP isolated sequences was quantified using the integral of the $\alpha B4$ sites at 44.2 ppm accounting for the number of reporting sites per comonomer:

$$H = I\alpha B4 / 2$$

The amount of 1-hexene incorporated in PHHP double consecutive sequences was quantified using the integral

of the $\alpha\alpha B4$ site at 41.7 ppm accounting for the number of reporting sites per comonomer:

$$HH = 2 * I\alpha\alpha B4$$

When double consecutive incorporation was observed the amount of 1-hexene incorporated in PHP isolated sequences needed to be compensated due to the overlap of the signals $\alpha B4$ and $\alpha B4B4$ at 44.4 ppm:

$$H = (I\alpha B4 - 2 * I\alpha\alpha B4) / 2$$

The total 1-hexene content was calculated based on the sum of isolated and consecutively incorporated 1-hexene:

$$Htotal = H + HH$$

When no sites indicative of consecutive incorporation observed the total 1-hexen comonomer content was calculated solely on this quantity:

$$Htotal = H$$

Characteristic signals indicative of regio 2,1-erythro defects were observed ( Resconi, L., Cavallo, L., Fait, A., Piemontesi, F., Chem. Rev. 2000, 100, 1253).

The presence of 2,1-erythro regio defects was indicated by the presence of the $P\alpha\beta$ (21e8) and $P\alpha\gamma$ (21e6) methyl sites at 17.7 and 17.2 ppm and confirmed by other characteristic signals.

The total amount of secondary (2,1-erythro) inserted propene was quantified based on the $\alpha\alpha$21e9 methylene site at 42.4 ppm:

$$P21 = I\alpha\alpha 21e9$$

The total amount of primary (1,2) inserted propene was quantified based on the main $S\alpha\alpha$ methylene sites at 46.7 ppm and compensating for the relative amount of 2,1-erythro, $\alpha B4$ and $\alpha\alpha B4B4$ methylene unit of propene not accounted for (note H and HH count number of hexene monomers per sequence not the number of sequences):

$$P12 = I_S\alpha\alpha + 2*P21 + H + HH / 2$$

The total amount of propene was quantified as the sum of primary (1,2) and secondary (2,1-erythro) inserted propene:

$$Ptotal = P12 + P21 = I_S\alpha\alpha + 3* I\alpha\alpha 21e9 + (I\alpha B4 - 2 * I\alpha\alpha B4) / 2 + I\alpha\alpha B4$$

This simplifies to:

$$Ptotal = I_S\alpha\alpha + 3* I\alpha\alpha 21e9 + 0.5*I\alpha B4$$

The total mole fraction of 1-hexene in the polymer was then calculated as:

$$fH = Htotal / ( Htotal + Ptotal)$$

The full integral equation for the mole fraction of 1-hexene in the polymer was:

$$fH = (((I\alpha B4 - 2 * I\alpha\alpha B4) / 2) + (2 * I\alpha\alpha B4)) /((I_S\alpha\alpha + 3* I\alpha\alpha 21e9 + 0.5*I\alpha B4 ) + ((I\alpha B4 - 2 * I\alpha\alpha B4) / 2) + (2 * I\alpha\alpha B4))$$

This simplifies to:

$$fH = (I\alpha B4/2 + I\alpha\alpha B4) / (I_S\alpha\alpha + 3* I\alpha\alpha 21e9 + I\alpha B4 + I\alpha\alpha B4)$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1 - fH) * 42.08) )$$

**DSC analysis, melting temperature (Tm) and crystallization temperature (Tc):** measured with a TA Instrument Q2000 differential scanning calorimetry (DSC) on 5 to 7 mg samples. DSC is run according to ISO 11357 / part 3 /method C2 in a heat / cool /heat cycle with a scan rate of 10°C/min in the temperature range of -30°C to +225°C.

Crystallization temperature and heat of crystallization (Hc) are determined from the cooling step, while melting temperature and heat of fusion (Hf) are determined from the second heating step.

**Haze was** determined according to ASTM D1003-00 on cast films of 50 μm thickness produced on a monolayer cast film line with a melt temperature of 220°C and a chill roll temperature of 20°C.

**Tensile modulus**

Tensile modulus in machine and transverse direction were determined according to ISO 527-3 at 23°C on the films as produced indicated below. Testing was performed at a cross head speed of 1 mm/min.

**Sealing initiation temperature (SIT); sealing end temperature (SET), sealing range:**

The method determines the sealing temperature range (sealing range) of polypropylene films. The sealing temperature range is the temperature range, in which the films can be sealed according to conditions given below. The lower limit (heat sealing initiation temperature (SIT)) is the sealing temperature at which a sealing strength of 5+/-0,5 N is achieved. The upper limit (sealing end temperature (SET)) is reached, when the films stick to the sealing device.

The sealing range was determined on a J&B Universal Sealing Machine Type 3000 of the multilayer films as produced indicated below with the following parameters:

Specimen width: 25.4 mm
Seal Pressure: 0.1 N/mm$^2$
Seal Time: 0.1 sec
Cool time: 99 sec
Peel Speed: 10 mm/sec
Start temperature 80°C
End temperature: 150°C
Increments: 10°C
specimen is sealed A to A at each seal bar temperature and seal strength (force) is determined at each step. The temperature is determined at which the seal strength reaches 5 N.

## 2. Examples

### Component (A)

### Catalyst: Synthesis of metallocene

The metallocene complex has been produced as described in WO2019/179959 for MC-2.

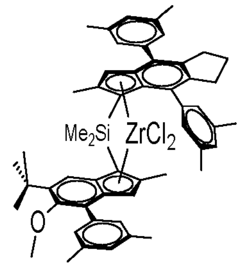

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight.

*Inventive Catalyst System 1(ICS1) Catalyst preparation*

30 wt.-% MAO in toluene (0.7 kg) was added into a steel nitrogen blanked reactor via a burette at 20 °C. Toluene (5.4 kg) was then added under stirring. Metallocene MC-2 (93 g) was added from a metal cylinder followed by flushing with 1 kg toluene. The mixture was stirred for 60 minutes at 20°C . Trityl tetrakis(pentafluorophenyl) borate (91 g) was then added from a metal cylinder followed by a flush with 1 kg of toluene. The mixture was stirred for 1 h at room temperature. The resulting silution was added to a a stirred cake of MAO-silica support prepared as described above over 1 hour. The cake was allowed to stay for 12 hours, folled by drying under N2 flow at 60°C for 2h and additionaly for 5 h under vacuum (-0.5 barg) under stirring stirring.

Dried catalyst was sampled in the form of pink free flowing powder containing 13.9% Al and 0.11% Zr.

As component (A) a propylene-hexene random copolymer was produced in a Borstar® pilot plant with a pre-polymerization reactor and one slurry loop reactor.

**Table 1: Component (A)**

| | | **Component (A)** |
|---|---|---|
| ***Prepolymerization*** | | |
| Temperature | °C | 25 |
| Pressure | kPa | 5111 |
| Catalyst feed | g/h | 8.5 |
| $H_2$ feed | g/h | 0.10 |
| ***Loop (Reactor*** **1)** | | |
| Temperature | °C | 65 |

(continued)

| | | |
|---|---|---|
| ***Loop (Reactor* 1)** | | |
| Pressure | kPa | 5056 |
| $H_2/C_3$ ratio | mol/kmol | 0.08 |
| $C_6/C_3$ ratio | mol/kmol | 45.9 |
| Liquid residence time | h | 0.37 |
| Loop reactor split | wt.-% | 43 |
| $MFR_2$ loop fraction* | g/10 min | 5.3 |
| $C_6$ content loop fraction* | wt.-% | 1.3 |
| XCS loop fraction* | wt.-% | 1.4 |
| ***GPR (Reactor 2)*** | | |
| Temperature | °C | 80 |
| Pressure | kPa | 2400 |
| $H_2/C_3$ ratio | mol/kmol | 1.1 |
| $C_6/C_3$ ratio | mol/kmol | 6.6 |
| Polymer residence time | h | 2.7 |
| GPR reactor split | wt.-% | 573 |
| $C_6$ content GPR fraction** | wt.-% | 5.5 |
| MFR of GPR fraction** | g/10min | 8.6 |
| XCS of GPR fraction** | wt.-% | 1.2 |
| ***Polymer properties*** | | |
| XCS | wt% | 1.3 |
| $MFR_2$ | g/10min | 7.0 |
| $C_6$ content | wt.-% | 3.7 |
| Tm | °C | 136 |
| ** R-PP1, ** R-PP2* | | |

**Component B**

As Component (B) RD804CF, a propylene-ethylene random copolymer, commercially available from Borealis has been used.

RD804CF has been produced with a phthalate free Ziegler Natta catalyst. $MFR_2$ (230°C) is 8.0 g/10min, C2 content 2.0 wt.-%, XCS content ~ 5.0 wt.-%, Tm 150°C.

**Composition:**

Component (A) and Component (B) and blends therefrom were compounded in a co-rotating twin-screw extruder Coperion TSE 16 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of of Ca-stearate (CAS-no.1592-23-0, commercially available from Faci, Italy) .

The inventive and comparative Examples were converted to monolayer cast films with a thickness of 50 $\mu$m on a PM30 cast line (type laboratory extruder provided by Plastik Maschinenbau GmbH., Germany).The equipment consists of an extruder, chill roll with air knife and a winder.

A PP 3-zone screw with a diameter of 30 mm, 25D length, 200 mm die, die gap 0.5 mm is applied in combination with a coat-hanger slit die assembly. The extrusion parameters were as follows: Extruder temperature profile:

220°C/240°C/250°C/260°C/260°C (Melt temperature 220°C; melt pressure 61 bar), Extruder speed: 50 rpm, Chill roll temperature: 20°C, take-off speed: 10.2 m/min

**Table 3** - Inventive and comparative Examples

| | | IE1 | CE1 | CE2 |
|---|---|---|---|---|
| Component A | wt.-% | 75.0 | 100 | 0 |
| Component B | wt.-% | 25.0 | 0 | 100 |
| blend | | | | |
| MFR | g/10min | 7.2 | 7.0 | 8 |
| XCS | wt.-% | 2.2 | 1.3 | 5.0 |
| Tm | °C | 141 | 136 | 150 |
| Tc | °C | 98 | 96 | 104 |
| Cast film (50 µm) | | | | |
| Tens.modulus MD | MPa | 502 | 495 | 520 |
| SIT | °C | 112 | 117 | 122 |
| Haze | % | 0.24 | 0.41 | 0.49 |

From the above table it can be clearly seen that the inventive polymer blend are characterised by an advantageous combination of sealing performance, low amounts of XCS and excellent optical properties.

## Claims

1. Polypropylene composition comprising a blend of

(A) 60.0 to 95.0 wt.-% of a metallocene catalysed propylene-hexene random copolymer with

a-1) a 1-hexene content in the range of from 1.0 to below 5.5 wt.-%,
a-2) an $MFR_2$ (230°C, 2.16kg, ISO1133) in a range of from 1.0 to 20.0 g/10 min
a-3) a melting temperature Tm (DSC) is in the range of from 130°C to 160°C and
a-4) a xylene cold soluble (XCS) amount in the range of 0.3 to 3.0 wt.-% (measured according to ISO 16152, 2005, at 25°C) and

(B) 5.0 to 40.0 wt.-% of a Ziegler-Natta catalysed propylene-ethylene random copolymer with

b-1) an ethylene content in the range of from 0.5 to 8.0 wt.-%,
b-2) an $MFR_2$ (230°C, 2.16kg, ISO1133) in a range of from 1.0 to 20.0 g/10 min,
b-3) a melting temperature Tm (DSC) is in the range of from 125°C to 160°C and
b-4) a xylene cold soluble (XCS) amount of greater than 2.5 to 10.0 wt.-% (measured according to ISO 16152, 2005, at 25°C).

2. Polypropylene composition according to claim 1, wherein the composition has

a melt flow rate $MFR_2$ (230°C) measured according to ISO 1133 in a range of from 1.0 to 20.0 g/10 min, preferably in a range of from 1.5 g/10min to 16.0 g/10 min, more preferably in a range of from 2.0 g/10 min to 12.0 g/10 min and even more preferably in a range of from 2.5 to 10.0 g/10 min;
a melting temperature in the range of from 130°C to 155°C, preferably in the range of from 135°C to 150°C, and more preferably in the range of from 137°C to 147°C;

a crystallization temperature in the range of from 85°C to 115°C, preferably in the range of from 90°C to 110°C and more preferably in the range of from 95°C to 105°C and
a xylene cold soluble (XCS) (determined at 25°C according ISO 16152; 2005) amount in the range of from 1.0 to 10.0 wt.-% preferably in the range of from 1.3 to 8.0.0 wt.-% and more preferably in the range from 1.5 to 6.5 wt.-%.

**3.** Polypropylene composition according to any of the preceding claims, wherein the propylene-hexene random copolymer has

an 1-hexene content preferably in the range of from 1.5 to 5.0 wt.-%, more preferably in the range of from 2.0 to 4.5 wt.-%, yet more preferably in the range of from 2.5 to 4.2 wt.-%, and even more preferably in the range of from 2.8 to 4.0 wt.-%;
an $MFR_2$ (230°C, 2.16kg, ISO1133) preferably in the range of from 1.5 to 15.0 g/10 min, more preferably in the range of from 2.0 to 12.0 g/10 min, yet more preferably in the range of from 3.0 to 10.0 g/10 min and even more preferably in the range of from 4.0 to 8.0 g/10 min,
a melting temperature Tm of the propylene-hexene random copolymer preferably in the range of from 132°C to 155°C, and more preferably in the range of from 134°C to 150°C and a xylene cold soluble (XCS) amount (measured according to ISO 16152, 2005, at 25°C) preferably in the range of 0.4 to 2.5 wt.-%, more preferably in the range of 0.5 to 2.0 wt.-%.

**4.** Polypropylene composition according to any of the preceding claims, wherein the propylene-hexene random copolymer consists of

25.0 to 50.0 wt.-%, preferably 30.0 to 48.0 wt.-%, more preferably 35.0 to 45.0 wt.-% of polymer fraction (R-PP1) having

(i) a 1-hexene content in the range of from 0.5 to 5.0 wt.-%, preferably 0.8 to 4.0 wt.-%, more preferably 1.0 to 3.0 wt.-% and
(ii) a melt flow rate $MFR_2$ (230°C/2.16kg) measured according to ISO 1133 in the range of from 2.0 to 10.0 g/10min, preferably from 3.0 to 9.0 g/10min, and

50.0 to 75.0 wt.-%, preferably 52.0 to 70.0 wt.-%, more preferably 55.0 to 65.0 wt.-% of polymer fraction (R-PP2) having

(i) a 1-hexene content in the range of from 3.5 to 10.0 wt.-%, preferably in the range of from 4.0 to 8.0 wt.-%, more preferably in the range of from 4.5 to 7.5 wt.-%, and
(ii) a melt flow rate $MFR_2$ (230°C/2.16kg) measured according to ISO 1133 in the range of from 1.0 to 20.0 g/10min, preferably from 3.0 to 15.0 g/10min, more preferably 5.0 to 10.0 g/10 min,

whereby the 1-hexene content of polymer fraction (R-PP2) is higher than the 1-hexene content of polymer fraction (R-PP1).

**5.** Polypropylene composition according to claim 4, wherein
fraction (R-PP1) has an amount of xylene cold soluble (XCS) in the range of 0.3 to 3.0 wt.-%, preferably 0.4 to 2.5 wt.-% and more preferably 0.5 to 2.0 wt.-%, and fraction (R-PP2) has an amount of xylene cold soluble (XCS) in the range of 0.3 to 3.0 wt.-%, preferably 0.4 to 2.5 wt.-% and more preferably 0.5 to 2.0 wt.-%

**6.** Polypropylene composition according to any of the preceding claims, wherein the propylene-ethylene random copolymer has

an ethylene content preferably in the range of from 0.8 to 7.0 wt.-%, more preferably in the range of from 1.0 to 6.0 wt.-%, yet more preferably in the range of from 1.2 to 5.0 wt.-% and even more preferably in the range of from 1.4 to 4.5 wt.-%,
a $MFR_2$ (230°C, 2.16kg, ISO1133) preferably in the range of from 1.5 to 16.0 g/10 min, more preferably in the range of from 2.0 to 12.0 g/10 min, yet more preferably in the range of from 3.0 to 10.0 g/10 min,
a melting temperature Tm preferably in the range of from 130°C to 158°C, more preferably of from 140 to 155°C and
a content of xylene cold solubles (XCS) preferably from 3.0 to 9.0 wt.-% and even more preferably from 3.5 to

8.0 wt.-%.

**7.** Polypropylene composition according to any of the preceding claims, wherein component (A) preferably is present in an amount of from 65.0 to 92.0 wt.-% and more preferably in an amount of from 70.0 to 90.0 wt.-% and component (B) is preferably present in an amount of from 8.0 to 35.0 wt.-% and more preferably in an amount of from 10.0 to 30.0 wt.-%.

**8.** Use of a composition according to any of claims 1 to 7 for producing articles, preferably cast or blown films.

**9.** An article comprising the polypropylene composition according to any of claims 1 to 7, wherein the article is an unoriented film comprising at least 90.0 wt.-%, preferably at least 95.0 wt.-%, yet more preferably at least 99.0 wt.-% of the polypropylene composition according to any one of the preceding claims 1 to 7, wherein the film is a cast film or a blown film, preferably a cast film.

**10.** Film according to claim 9, wherein the film has a tensile modulus in machine and transverse direction determined according to ISO 527 at 23°C on 50 μm cast film in a range of 350 to 800 MPa, more preferably in a range of 380 to 750 MPa, like in a range of 400 to 720 MPa.

**11.** Film according to claim 9 or 10, wherein the film has a sealing initiation temperature (SIT) (determined as described in the experimental part) in the range of from 90°C to 125°C, more preferably in the range of from 95°C to less than 120°C, like in the range of from 100°C to less than 115°C.

**12.** Film according to claim any of the preceding claims 9 to 11, wherein the film has a haze determined according to ASTM D1003-00 on 50 μm cast film in a range of from 0.01 to below 1.0%, preferably in a range of from 0.05 to below 0.50% and more preferably in a range of from 0.10 to below 0.40%.

**13.** Use of a film according to claim any of the preceding claims 9 to 12 as sealing layer in multilayer films.

## Patentansprüche

**1.** Polypropylenzusammensetzung, umfassend eine Mischung aus

(A) 60,0 bis 95,0 Gew.-% eines metallocenkatalysierten statistischen Propylen-Hexen-Copolymers mit

a-1) einem 1-Hexen-Gehalt im Bereich von 1,0 bis unter 5,5 Gew.-%,
a-2) einer $MFR_2$ (230°C, 2,16kg, ISO1133) in einem Bereich von 1,0 bis 20,0 g/10 min
a-3) einer Schmelztemperatur Tm (DSC) im Bereich von 130°C bis 160°C und
a-4) einer in Xylol kalt löslichen (XCS) Menge im Bereich von 0,3 bis 3,0 Gew.-% (gemessen gemäß ISO 16152, 2005, bei 25°C) und

(B) 5,0 bis 40,0 Gew.-% eines Ziegler-Natta-katalysierten statistischen Propylen-Ethylen-Copolymers mit

b-1) einen Ethylengehalt im Bereich von 0,5 bis 8,0 Gew.-%,
b-2) einer $MFR_2$ (230°C, 2,16kg, ISO1133) in einem Bereich von 1,0 bis 20,0 g/10 min,
b-3) einer Schmelztemperatur Tm (DSC) im Bereich von 125°C bis 160°C und
b-4) einer in Xylol kalt löslichen (XCS) Menge von mehr als 2,5 bis 10,0 Gew.-% (gemessen gemäß ISO 16152, 2005, bei 25 °C).

**2.** Polypropylenzusammensetzung gemäß Anspruch 1, wobei die Zusammensetzung Folgendes aufweist

eine Schmelzflussrate $MFR_2$ (230°C), gemessen nach ISO 1133, in einem Bereich von 1,0 bis 20,0 g/10 min, vorzugsweise in einem Bereich von 1,5 g/10 min bis 16,0 g/10 min, stärker bevorzugt in einem Bereich von 2,0 g/10 min bis 12,0 g/10 min und noch bevorzugter in einem Bereich von 2,5 bis 10,0 g/10 min;
eine Schmelztemperatur im Bereich von 130°C bis 155°C, vorzugsweise im Bereich von 135°C bis 150°C, und stärker bevorzugt im Bereich von 137°C bis 147°C;
eine Kristallisationstemperatur im Bereich von 85°C bis 115°C, vorzugsweise im Bereich von 90°C bis 110°C und stärker bevorzugt im Bereich von 95°C bis 105°C und

eine in Xylol kalt lösliche (XCS) Menge (bestimmt bei 25°C gemäß ISO 16152; 2005) im Bereich von 1,0 bis 10,0 Gew.-%, vorzugsweise im Bereich von 1,3 bis 8,0,0 Gew.-% und stärker bevorzugt im Bereich von 1,5 bis 6,5 Gew.-%.

**3.** Polypropylenzusammensetzung gemäß einem der vorhergehenden Ansprüche, wobei das statistische Propylen-Hexen-Copolymer Folgendes aufweist

einen 1-Hexen-Gehalt vorzugsweise im Bereich von 1,5 bis 5,0 Gew.-%, stärker bevorzugt im Bereich von 2,0 bis 4,5 Gew.-%, noch bevorzugter im Bereich von 2,5 bis 4,2 Gew.-% und noch bevorzugter im Bereich von 2,8 bis 4,0 Gew.-%;
eine $MFR_2$ (230°C, 2,16 kg, ISO1133) vorzugsweise im Bereich von 1,5 bis 15,0 g/10 min, stärker bevorzugt im Bereich von 2,0 bis 12,0 g/10 min, noch bevorzugter im Bereich von 3,0 bis 10,0 g/10 min und noch bevorzugter im Bereich von 4,0 bis 8,0 g/10 min,
eine Schmelztemperatur Tm des statistischen Propylen-Hexen-Copolymers vorzugsweise im Bereich von 132°C bis 155°C und stärker bevorzugt im Bereich von 134°C bis 150°C und
eine in Xylol kalt lösliche (XCS) Menge (gemessen gemäß ISO 16152, 2005, bei 25°C) vorzugsweise im Bereich von 0,4 bis 2,5 Gew.-%, stärker bevorzugt im Bereich von 0,5 bis 2,0 Gew.-%.

**4.** Polypropylenzusammensetzung gemäß einem der vorhergehenden Ansprüche, wobei das statistische Propylen-Hexen-Copolymer besteht aus

25,0 bis 50,0 Gew.-%, vorzugsweise 30,0 bis 48,0 Gew.-%, stärker bevorzugt 35,0 bis 45,0 Gew.-% der Polymerfraktion (R-PP1) mit

(i) einem 1-Hexen-Gehalt im Bereich von 0,5 bis 5,0 Gew.-%, vorzugsweise 0,8 bis 4,0 Gew.-%, stärker bevorzugt 1,0 bis 3,0 Gew.-% und
(ii) einer nach ISO 1133 gemessenen Schmelzflussrate $MFR_2$ (230°C/2,16kg) im Bereich von 2,0 bis 10,0 g/10min, vorzugsweise von 3,0 bis 9,0 g/10min, und

50,0 bis 75,0 Gew.-%, vorzugsweise 52,0 bis 70,0 Gew.-%, stärker bevorzugt 55,0 bis 65,0 Gew.-% der Polymerfraktion (R-PP2) mit

(i) einem 1-Hexen-Gehalt im Bereich von 3,5 bis 10,0 Gew.-%, vorzugsweise im Bereich von 4,0 bis 8,0 Gew.-%, stärker bevorzugt im Bereich von 4,5 bis 7,5 Gew.-%, und
(ii) einer nach ISO 1133 gemessenen Schmelzflussrate $MFR_2$ (230°C/2,16kg) im Bereich von 1,0 bis 20,0 g/10min, vorzugsweise von 3,0 bis 15,0 g/10min, stärker bevorzugt 5,0 bis 10,0 g/10min,

wobei der 1-Hexengehalt der Polymerfraktion (R-PP2) höher ist als der 1-Hexengehalt der Polymerfraktion (R-PP1).

**5.** Polypropylenzusammensetzung gemäß Anspruch 4, wobei

Fraktion (R-PP1) eine in Xylol kalt lösliche (XCS) Menge im Bereich von 0,3 bis 3,0 Gew.-%, vorzugsweise 0,4 bis 2,5 Gew.-% und stärker bevorzugt 0,5 bis 2,0 Gew.-% aufweist, und
Fraktion (R-PP2) eine in Xylol kalt lösliche (XCS) Menge im Bereich von 0,3 bis 3,0 Gew.-%, vorzugsweise 0,4 bis 2,5 Gew.-% und stärker bevorzugt 0,5 bis 2,0 Gew.-% aufweist.

**6.** Polypropylenzusammensetzung gemäß einem der vorhergehenden Ansprüche, wobei das statistische Propylen-Ethylen-Copolymer Folgendes aufweist

einen Ethylengehalt vorzugsweise im Bereich von 0,8 bis 7,0 Gew.-%, stärker bevorzugt im Bereich von 1,0 bis 6,0 Gew.-%, noch bevorzugter im Bereich von 1,2 bis 5,0 Gew.-% und noch bevorzugter im Bereich von 1,4 bis 4,5 Gew.-%,
eine $MFR_2$ (230°C, 2,16 kg, ISO1133) vorzugsweise im Bereich von 1,5 bis 16,0 g/10 min, stärker bevorzugt im Bereich von 2,0 bis 12,0 g/10 min, noch bevorzugter im Bereich von 3,0 bis 10,0 g/10 min,
eine Schmelztemperatur Tm vorzugsweise im Bereich von 130 °C bis 158 °C, stärker bevorzugt von 140 °C bis 155 °C, und
einen Xylol kalt löslichen (XCS) Gehalt von vorzugsweise 3,0 bis 9,0 Gew.-% und stärker bevorzugt von 3,5

bis 8,0 Gew.-%.

7. Polypropylenzusammensetzung gemäß einem der vorhergehenden Ansprüche, wobei die Komponente (A) vorzugsweise in einer Menge von 65,0 bis 92,0 Gew.-% und stärker bevorzugt in einer Menge von 70,0 bis 90,0 Gew.-% vorliegt und die Komponente (B) vorzugsweise in einer Menge von 8,0 bis 35,0 Gew.-% und stärker bevorzugt in einer Menge von 10,0 bis 30,0 Gew.-% vorliegt.

8. Verwendung einer Zusammensetzung nach einem der Ansprüche 1 bis 7 zur Herstellung von Gegenständen, vorzugsweise Gieß- oder Blasfolien.

9. Gegenstand, umfassend die Polypropylenzusammensetzung nach einem der Ansprüche 1 bis 7, wobei der Gegenstand eine unorientierte Folie ist, die mindestens 90,0 Gew.-%, vorzugsweise mindestens 95,0 Gew.-%, noch bevorzugter mindestens 99,0 Gew.-% der Polypropylenzusammensetzung nach einem der vorhergehenden Ansprüche 1 bis 7 umfasst, wobei die Folie eine Gießfolie oder eine Blasfolie, vorzugsweise eine Gießfolie, ist.

10. Folie gemäß Anspruch 9, wobei die Folie einen Zugmodul in Maschinen- und Querrichtung, bestimmt nach ISO 527 bei 23°C mit einer 50 μm Gießfolie, in einem Bereich von 350 bis 800 MPa, bevorzugt in einem Bereich von 380 bis 750 MPa, wie in einem Bereich von 400 bis 720 MPa aufweist.

11. Folie gemäß Anspruch 9 oder 10, wobei die Folie eine Siegelbeginntemperatur (SIT) (bestimmt wie im experimentellen Teil beschrieben) im Bereich von 90°C bis 125°C, vorzugsweise im Bereich von 95°C bis weniger als 120°C, wie im Bereich von 100°C bis weniger als 115°C, aufweist.

12. Folie gemäß einem der vorhergehenden Ansprüche 9 bis 11, wobei die Folie eine Trübung, bestimmt nach ASTM D1003-00 mit einer 50 μm Gießfolie, in einem Bereich von 0,01 bis unter 1,0 %, vorzugsweise in einem Bereich von 0,05 bis unter 0,50 % und besonders bevorzugt in einem Bereich von 0,10 bis unter 0,40 % aufweist.

13. Verwendung einer Folie nach einem der vorhergehenden Ansprüche 9 bis 12 als Siegelschicht in Mehrschichtfolien.

**Revendications**

1. Composition de polypropylène comprenant un mélange de

(A) 60,0 à 95,0 % en poids d'un copolymère aléatoire de propylène-hexène catalysé par un métallocène ayant

a-1) une teneur en 1-hexène dans la plage de 1,0 à moins de 5,5 % en poids,
a-2) un $MFR_2$ (230°C, 2, 16 kg, ISO1133) dans la plage de 1,0 à 20,0 g/10 min,
a-3) un point de fusion Tm (DSC) dans la plage de 130°C à 160°C, et
a-4) une quantité soluble à froid dans le xylène (XCS) dans la plage de 0,3 à 3,0 % en poids (mesurée conformément à la norme ISO 16152, 2005, à 25°C), et

(B) 5,0 à 40,0 % en poids d'un copolymère aléatoire de propylène-éthylène catalysé par un catalyseur de Ziegler-Natta ayant

b-1) une teneur en éthylène dans la plage de 0,5 à 8,0 % en poids,
b-2) un $MFR_2$ (230°C, 2,16 kg, ISO1133) dans la plage de 1,0 à 20,0 g/10 min,
b-3) un point de fusion Tm (DSC) dans la plage de 125°C à 160°C, et
b-4) une quantité soluble à froid dans le xylène (XCS) en une quantité de plus de 2,5 à 10 % en poids (mesurée conformément à la norme ISO 16152, 2005, à 25°C).

2. Composition de polypropylène selon la revendication 1, dans laquelle la composition a un indice de fluage $MFR_2$ (230°C), mesuré conformément à la norme ISO 1133, dans la plage de 1,0 à 20,0 g/10 min, de préférence dans la plage de 1,5 g/10 min à 16,0 g/10 min, plus préférablement dans la plage de 2,0 g/10 min à 12,0 g/10 min et encore plus préférablement dans la plage de 2,5 à 10,0 g/10 min ;

un point de fusion dans la plage de 130°C à 155°C, de préférence dans la plage de 135°C à 150°C, et plus préférablement dans la plage de 137°C à 147°C ;

une température de cristallisation dans la plage de 85°C à 115°C, de préférence dans la plage de 90°C à 110°C et plus préférablement dans la plage de 95°C à 105°C ; et
une quantité soluble à froid dans le xylène (XCS) (déterminée à 25°C conformément à la norme ISO 16152 ; 2005) dans la plage de 1,0 à 10,0 % en poids, de préférence dans la plage de 1,3 à 8,0 % en poids, et plus préférablement dans la plage de 1,5 à 6,5 % en poids.

**3.** Composition de polypropylène selon l'une quelconque des revendications précédentes, dans laquelle le copolymère aléatoire de propylène-hexène a

une teneur en 1-hexène de préférence dans la plage de 1,5 à 5,0 % en poids, plus préférablement dans la plage de 2,0 à 4,5 % en poids, encore plus préférablement dans la plage de 2,5 à 4,2 % en poids, et bien plus préférablement dans la plage de 2,8 à 4,0 % en poids ;
un $MFR_2$ (230°C, 2,16 kg, ISO 1133) de préférence dans la plage de 1,5 à 15,0 g/10 min, plus préférablement dans la plage de 2,0 à 12,0 g/10 min, encore plus préférablement dans la plage de 3,0 à 10,0 g/10 min, et bien plus préférablement dans la plage de 4,0 à 8,0 g/10 min ;
un point de fusion Tm du copolymère aléatoire de propylène-hexène de préférence dans la plage de 132°C à 155°C, et plus préférablement dans la plage de 134°C à 150°C ; et
une quantité soluble à froid dans le xylène (XCS) (mesurée conformément à la norme ISO 16152, 2005, à 25°C) de préférence dans la plage de 0,4 à 2,5 % en poids, plus préférablement dans la plage de 0,5 à 2,0 % en poids.

**4.** Composition de polypropylène selon l'une quelconque des revendications précédentes, dans laquelle le copolymère aléatoire de propylène-hexène consiste en 25,0 à 50,0 % en poids, de préférence 30,0 à 48,0 % en poids, plus préférablement 35,0 à 45,0 % en poids de fraction de polymère (R-PP1) ayant

(i) une teneur en 1-hexène dans la plage de 0,5 à 5,0 % en poids, de préférence de 0,8 à 4,0 % en poids, plus préférablement de 1,0 à 3,0 % en poids, et
(ii) un indice de fluage $MFR_2$ (230°C/2,16 kg), mesuré conformément à la norme ISO 1133, dans la plage de 2,0 à 10,0 g/10 min, de préférence de 3,0 à 9,0 g/10 min, et50,0 à 75;0 % en poids, de préférence 52,0 à 70,0 % en poids, plus préférablement de 55,0 à 65,0 % en poids de fraction de polymère (R-PP2) ayant

(i) une teneur en 1-hexène dans la plage de 3,5 à 10,0 % en poids, de préférence dans la plage de 4,0 à 8,0 % en poids, plus préférablement dans la plage de 4,5 à 7,5 % en poids, et
(ii) un indice de fluage $MFR_2$ (230°C/2,16 kg), mesuré conformément à la norme ISO 1133, dans la plage de 1,0 à 20,0 g/10 min, de préférence de 3,0 à 15,0 g/10 min, plus préférablement de 5,0 à 10,0 g/10 min, moyennant quoi la teneur en 1-hexène de la fraction de polymère (R-PP2) est supérieure à la teneur en 1-hexène de la fraction de polymère (R-PP1).

**5.** Composition de polypropylène selon la revendication 4, dans laquelle
la fraction (R-PP1) a une quantité soluble à froid dans le xylène (XCS) dans la plage de 0,3 à 3,0 % en poids, de préférence de 0,4 à 2,5 % en poids, et plus préférablement de 0,5 à 2,0 % en poids, et la fraction (R-PP2) a une quantité soluble à froid dans le xylène (XCS) dans la plage de 0,3 à 3,0 % en poids, de préférence de 0,4 à 2,5 % en poids et plus préférablement de 0,5 à 2,0 % en poids.

**6.** Composition de polypropylène selon l'une quelconque des revendications précédentes, dans laquelle le copolymère aléatoire de propylène-éthylène a

une teneur en éthylène de préférence dans la plage de 0,8 à 7,0 % en poids, plus préférablement dans la plage de 1,0 à 6,0 % en poids, encore plus préférablement dans la plage de 1,2 à 5,0 % en poids, et bien plus préférablement dans la plage de 1,4 à 4,5 % en poids,
un $MFR_2$ (230°C, 2,16 kg, ISO 1133) de préférence dans la plage de 1,5 à 16,0 g/10 min, plus préférablement dans la plage de 2,0 à 12,0 g/10 min, encore plus préférablement dans la plage de 3,0 à 10,0 g/10 min,
un point de fusion Tm de préférence dans la plage de 130°C à 158°C, plus préférablement de 140 à 155°C, et une teneur soluble à froid dans le xylène (XCS) de préférence de 3,0 à 9,0 % en poids et plus préférablement de 3,5 à 8,0 % en poids.

**7.** Composition de polypropylène selon l'une quelconque des revendications précédentes, dans laquelle le composant (A) est présent de préférence en une quantité de 65,0 à 92,0 % en poids et plus préférablement en une quantité de 70,0 à 90,0 % en poids, et le composé (B) est présent de préférence en une quantité de 8,0 à 35,0 % en poids

et plus préférablement en une quantité de 10,0 à 30,0 % en poids.

8. Utilisation d'une composition selon l'une quelconque des revendications 1 à 7 pour produire des articles, de préférence des films coulés ou soufflés.

9. Article comprenant la composition de polypropylène selon l'une quelconque des revendications 1 à 7, dans lequel l'article est un film non orienté comprenant au moins 90,0 % en poids, de préférence au moins 95,0 % en poids, plus préférablement au moins 99,0 % en poids de la composition de polypropylène selon l'une quelconque des revendications 1 à 7, dans lequel le film est un film coulé ou un film soufflé, de préférence un film coulé.

10. Film selon la revendication 9, dans lequel le film a un module de traction dans la direction machine et la direction transversale, déterminé conformément à la norme ISO 527 à 23°C sur un film coulé de 50 μm, dans la plage de 350 à 800 MPa, plus préférablement dans la plage de 380 à 750 MPa, tel que dans la plage de 400 à 720 MPa.

11. Film selon la revendication 9 ou 10, dans lequel le film a une température d'initiation de scellage (SIT) (déterminée comme décrit dans la partie expérimentale) dans la plage de 90°C à 125°C, plus préférablement dans la plage de 95°C à moins de 120°C, telle que dans la plage de 100°C à moins de 115°C.

12. Film selon l'une quelconque des revendications 9 à 11, dans lequel le film a un voile, déterminé conformément à la norme ASTM D1003-00 sur un film coulé de 50 μm, dans la plage de 0,01 à moins de 1,0 %, de préférence dans la plage de 0,05 à moins de 0,50 % et plus préférablement dans la plage de 0,10 à moins de 0,40 %.

13. Utilisation d'un film selon l'une quelconque des revendications 9 à 12 en tant que couche de scellement dans des films multicouche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019012110 A1
- EP 3387066 A1
- EP 3387066 A
- WO 2019179959 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 9414856 A
- WO 9512622 A
- WO 2006097497 A
- EP 0887379 A
- WO 9212182 A
- WO 2004000899 A
- WO 2004111095 A
- WO 9924478 A
- WO 9924479 A
- WO 0068315 A
- WO 2003000757 A
- WO 2003000754 A
- WO 2004029112 A
- WO 2007137853 A
- WO 2019012110 A
- WO 2012007430 A
- EP 2610271 A
- EP 261027 A
- EP 2610272 A


### Non-patent literature cited in the description


- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- **KLIMKE, K. ; PARKINSON, M. ; PIEL, C. ; KAMINSKY, W. ; SPIESS, H.W. ; WILHELM, M.** 207. *Macromol. Chem. Phys.,* 2006, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **RESCONI, L. ; CAVALLO, L. ; FAIT, A. ; PIEMONTESI, F.** *Chem. Rev.,* 2000, vol. 100, 1253
- *CHEMICAL ABSTRACTS,* 6683-19-8
- *CHEMICAL ABSTRACTS,* 31570-04-4
- *CHEMICAL ABSTRACTS,* 1592-23-0